# EUROPEAN PATENT APPLICATION

(11) **EP 1 034 873 A1**
(43) Date of publication of application: **13.09.2000**
(21) Application number: 99104715.0
(22) Date of filing: 10.03.1999
(51) Int. Cl.: B23K 9/028

(54) **Method and apparatus of manufacturing heat pipe**

(71) Applicant: Oh, Soon Bong, Bundang-gu, Sungnam-shi, Kyungki-do (KR)
(72) Inventor: Lee, Soo Hyun, Dong-gu Taegu (KR)
(74) Representative: Riebling, Peter, Dr.-Ing.

(57) **Abstract**

The present invention pertains to a method of manufacturing a heat pipe and the same apparatus whose welding rod of tungsten, not easily melting at a high temperature, fuses an object to be welded itself, not the rod, and in which, during welding, both end caps of the pipe are designed to be welded at the same time for the purpose of less damage of the material and more density of welding for longer vacuum condition, as well as quick operation, resulting in more excellent performance and longer duration.

## Description

### FIELD OF THE INVENTION

The present invention relates to a method cf manufacturing a heat pipe and the same apparatus. Particularly, this invention pertains to a method of manufacturing a heat pipe and the same apparatus whose welding rod of tungsten, not easily melting at a high temperature, fuses an object to be welded itself, not the rod, and in which, during welding, both end caps of the pipe are designed to be welded at the same time for the purpose of less damage of the material and more density of welding for longer vacuum condition, as well as quick operation, resulting in more excellent performance and longer duration.

### BACKGROUND OF THE INVENTION

Generally speaking, a heat pipe is made in vacuum condition thereinside and contains a heat medium at one side so that, when heated, it is evaporated and expands fast to conduct heat rapidly. According to prior art, a heat pipe is fabricated in such a manner that a stainless pipe is cut in a predetermined length, caps of the same stainless steel are inserted into both ends of the pipe cut and welded one by one with argon in the atmosphere using a stainless welding rod, a heat medium is injected through an injection hole formed on one of the caps, air is discharged from the inside of the pipe, and then electric welding is carried out on the hole in the vacuum condition with the welding rod.

The above method, however, involves slow and inefficient welding and much loss of heat of the material due to the argon welding of the caps one by one in the atmosphere, and results in corrosion of the welding position due to imperfect vacuum during welding despite argon. Such damage of material may make air going into the vacuum pipe to easily destroy its vacuum state, decreasing the speed of heat conduction of the pipe, which is vital to it, and thus reducing the duration along with decrease of performance.

Meanwhile, in the electric welding of the injection hole in the vacuum condition as well as in the argon welding of the caps in the atmosphere, welding is performed by fusing the welding rod not the object to be welded. More specifically, it is natural that argon wounding is carried out by melting the welding rod through heat. However, in the electric welding, despite the heat of electric spark applied to both the welding rod and the object to be welded, the welding rod is first fused to bury the injection hole because it has a very small. diameter to create less dispersion of heat rather than the injection hole around which the heat of the electric spark conducts and disperses across the caps. Due to the different materials (each of stainless steels has different properties), this welding performs less perfect welding than does welding in which the same material is fused.

In addition, the prior art welding causes the welding rod to become shorter due to its continued usage, requiring ceaseless adjustment of the distance to the object to be welded with a special adjustment tool. When the welding rod becomes short below a predetermined length, it must be changed.

### SUMMARY OF THE INVENTION

Therefore, in order to overcome such drawbacks of the prior art, an objective of the present invention is to provide a method of manufacturing a heat pipe and the same apparatus in which both caps as well as the injection hole are electrically welded in the vacuum condition, the caps being welded at the same time, and the welding rod is made of tungsten which has heat resisting properties and strength much higher than those of stainless so that net the welding rod but an object to be welded is fused.

To accomplish the objective of the present invention, there is provided a method of manufacturing a heat pipe comprising the steps of: (a) coupling a cap with an injection hole and another cap with no hole to both ends of the pipe; (b) welding the caps on both ends of the pipe in a vacuum condition; and (c) injecting contents into the pipe, and tightly closing the injection hole through an electric welder.

According to the method the step (c) comprises the substeps of: injecting contents into the pipe through the injection hole; inserting the pipe into a pipe inserting portion while standing erect so that the injection hole becomes near a welding rod; and operating a vacuum pump to vacuumize a vacuum box, and at the same time, operating the electric welder to tightly close the injection hole.

According to another aspect of the present invention, an apparatus of manufacturing a heat pipe comprises: pipe carrying means for holding and moving the pipe to a predetermined position on a worktable; first and second welders provided on the worktable and on both ends of the pipe for welding a cap with no injection hole and another cap with an injection hole to the ends of the pipe, respectively; first welder carrying means for moving the first welder to a predetermined position; and electric welding means for injecting contents into the pipe through the injection hole of the cap, and tightly closing the hole.

The pipe carrying means comprises: a clamp for fixing the middle of the pipe; a supporting bar for holding the clamp; a slider integrally formed in the middle of the supporting bar for sliding the top surface of the worktable; and a hydraulic cylinder connected to the lower end of the supporting bar for shifting the slider.

The first and second welders each comprise: a vacuum box connected to a vacuum pump so that both ends of the pipe are exposed in a vacuum condition; a pipe inserting portion placed in front of the vacuum box for causing the pipe to be inserted; a welding rod inserting portion movably installed at the back of the vacuum box, and in which the end of the welding rod is exposed in the vacuum condition and spaced apart from the end of the pipe at a predetermined distance; and a welding bar inserting portion coupled at the back of the welding rod inserting portion, and having a welding bar for fixing the welding rod.

The first welder carrying means comprises: a supporting bar for supporting the first welder; a slider integrally formed in the middle of the supporting bar, and for sliding the top surface of the worktable; and a hydraulic cylinder connected to the supporting bar for moving the slider.

The electric welding means comprises: a vacuum box connected to a vacuum pump and in which the cap with the injection hole is exposed in a vacuum condition; a pipe inserting portion placed in front of the vacuum box and for causing the pipe to be inserted; a welding rod inserting portion movably inserted at the back of the vacuum box, and in which the end of the welding rod is exposed in a vacuum condition and spaced apart from the end of the pipe; and a welding bar inserting portion coupled at the back of the welding rod inserting portion, and having a welding bar for fixing the welding rod.

### BRIEF DESCRIPTION OF THE ATTACHED DRAWINGS

These and other features of the invention will be understood more clearly from the following description, read in conjunction with the drawings, in which:
FIG. 1 is a lateral construction diagram of a cap welding apparatus according to the present invention;
FIG. 2 is a sectional construction diagram of the cap welding apparatus of the present invention;
FIG. 3 is a sectional construction diagram of an injection hole welding apparatus according to the present invention;
FIG. 4 is a partially enlarged section of the caps of the heat pipe according to the present invention; and
FIG. 5 is a flow chart of showing the operation sequence of the present invention.

### DETAILED DESCRIPTION OF THE INVENTION

Hereinafter, preferred embodiments of the present invention will be described in detail with the attached drawings.

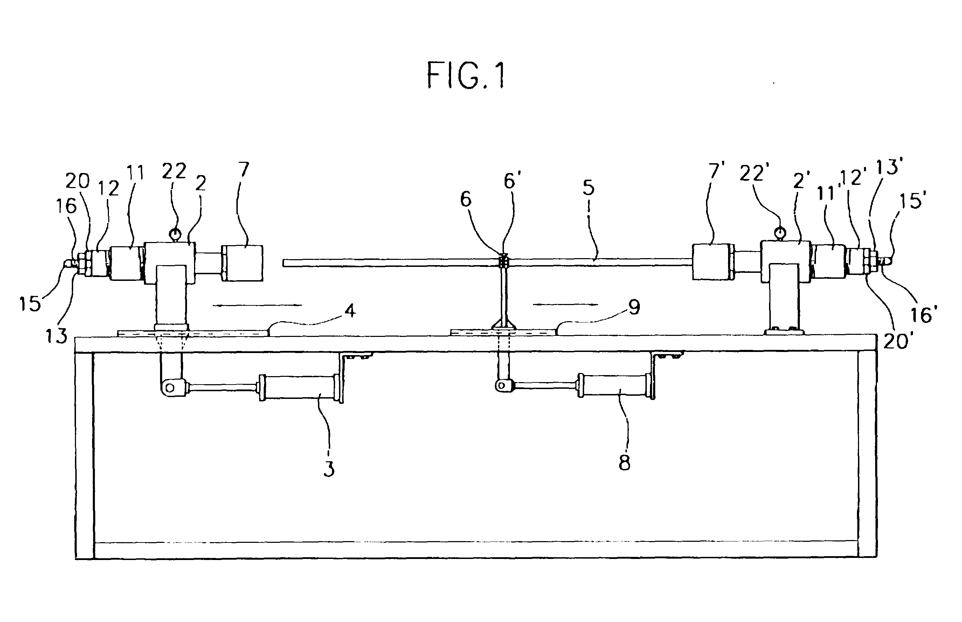

Referring to FIGS. 1-4, one embodiment of the heat pipe of the present invention roughly comprises: pipe carrying means for holding and conveying a pipe 5 to a predetermined position on a worktable 1; first and second welding apparatuses 110 and 110' provided on both sides of worktable 1 so that a cap 18 having no injection hole and a cap 18' having an injection hole 19 are welded on one and the other ends of pipe 5; first welding apparatus carrying means for moving first welding apparatus 110; and electric welding means for injecting material into pipe 5 through injection hole 19 of caps 18 and 18' and tightly welding the hole.

The pipe carrying means is constructed with a clamp 6', a supporting bar 6, a slider 9, and a hydraulic cylinder 8. The clamp 6' fixes the middle of pipe 5, and supporting bar 6 horizontally maintains pipe 5 by supporting clamp 6. Slider 9 acts to slide along the top surface of worktable 1, and hydraulic cylinder a is connected to the lower end of supporting bar 6 to move slider 9.

The welding apparatus comprises vacuum boxes 2 and 2', pipe inserting portions 7 and 7', welding rod inserting portions 11 and 11', and welding bar inserting portions 12 and 12'. Vacuum boxes 2 and 2' are connected to a vacuum pump 17 which allows both ends of pipe 5 to be exposed in vacuum. Pipe inserting portions 7 and 7', placed in front of vacuum boxes 2 and 2', cause pipe 5 to be inserted. Welding rod inserting portions 11 and 11' are movably installed on the back of vacuum boxes 2 and 2'. In those portions, welding rods 14 and 14' are inserted whose ends are exposed in vacuum and spaced apart from the ends of pipe 5. Welding bar inserting portions 12 and 12' are coupled to the back of welding rod inserting portions 11 and 11'. Additionally, welding bars 15 and 15' are provided to firmly hold welding rods 14 and 14', respectively.

Welding rods 14 and 14' are made of tungsten and almost as thick as the diameter of caps 18 and 18'. In the first electric welding only caps 18 and 18' are welded.

The welding bars 15 and 15' for supporting welding rods 14 and 14' are screwed with caps 18 and 18' coupled to vacuum boxes 2 and 2'. Both ends of welding rods 14 and 14' and pipe 5 are designed to keep a predetermined distance from each other in such a manner that pipe 5 is pushed into vacuum boxes 2 and 2' until the ends of pipe 5 come into contact with welding rods 14 and 14', and that the rods are screwed in one or two revolutions.

The first welding apparatus carrying means comprises a supporting bar 8' for holding the first welding apparatus 110, a slider 4 integrally formed on one end of supporting bar 8' for sliding the top surface of worktable 1, and a hydraulic cylinder 3 connected to supporting bar 8 for moving slider 4.

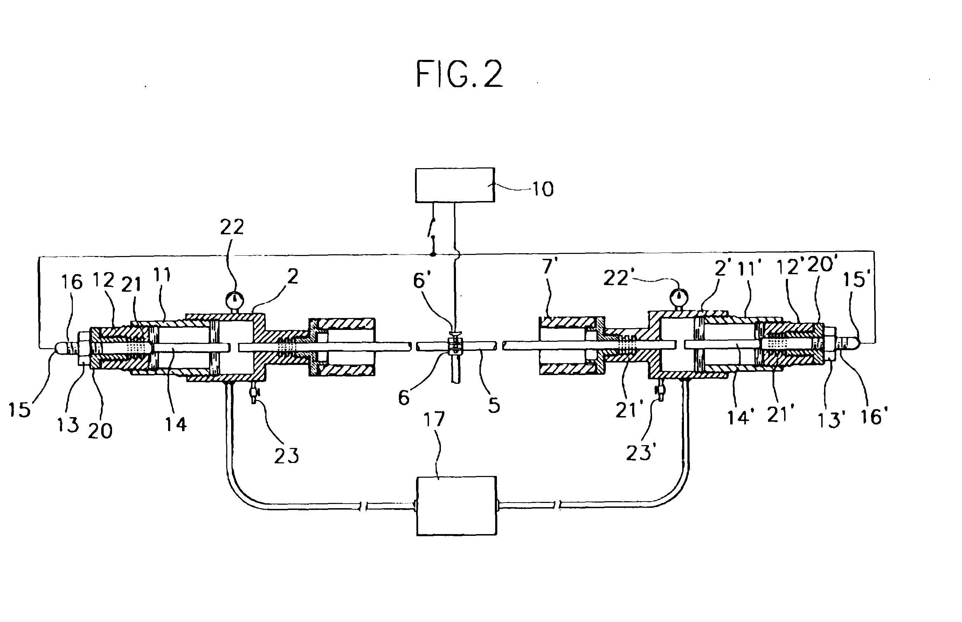

As shown in FIGS. 1 and 2, both ends of pipe 5 having caps 18 and 18' inserted thereinto are put into vacuum boxes 2 and 2' installed on worktable 1 at a predetermined interval, welding rods 14 and 14' and both ends of pipe 5 are located close so as to allow chemist create spark, and vacuum pump 17 connected to vacuum boxes 2 and 2' discharges air from vacuum boxes 2 and 2' and pipe 5. Then, a high-voltage current is applied to welding rods 14 and 14' and pipe 5 with an electric welder to electrically weld caps 18 and 18' at the same time. For this, one of vacuum boxes 2 and 2' is fixed, and the other is moved left and right within a predetermined distance so that pipe 5 can be put into or extracted from vacuum boxes 2 and 2'.

While the vacuum boxes 2 and 2' of the same structure are installed on worktable 1, the left box 2 is designed to slide on slider 4 by hydraulic cylinder 3 and the right box 2' to be fixed. Therefore, in order to insert both ends of pipe 5 into vacuum boxes 2 and 2', the right end of pipe 5 is first inserted into the right box 2', and then the left box 2 is moved right so that the left end of pipe 5 is put into the left vacuum box 2. In case of taking out pipe 5 after welding, the reverse sequence of the insertion is carried out.

The pipe inserting portions 7 and 7' screwed on the ends of vacuum boxes 2 and 2' are both nonconductors. The welding bar inserting portions 12 and 12' screwed to welding bar inserting portions 11 and 11' and caps 18 and 18' screwed to welding bar inserting portions 12 and 12' are also nonconductors.

The welding rods 14 and 14' of tungsten have almost the same diameter as that of pipe 5, and are fixedly inserted into welding bars 15 and 15'. They are put into vacuum boxes 2 and 2' through welding rod inserting portions 11 and 11'.

The welding bars 15 and 15', conductors, have spiral portions 16 and 16' thereon, and are screwed onto outer nuts 13 and 13' so as to penetrate nuts 13 and 13' and welding bar inserting portions 12 and 12'. vacuum boxes 2 and 2' are connected to vacuum pump 17, and welding rods 14 and 14' to the ends of welding bars 15 and 15' and clamp 6'.

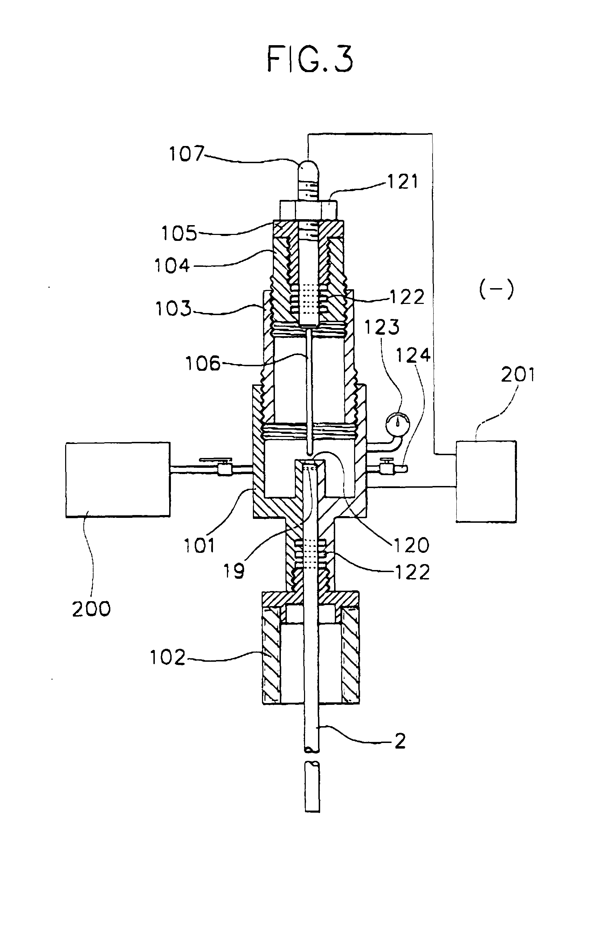

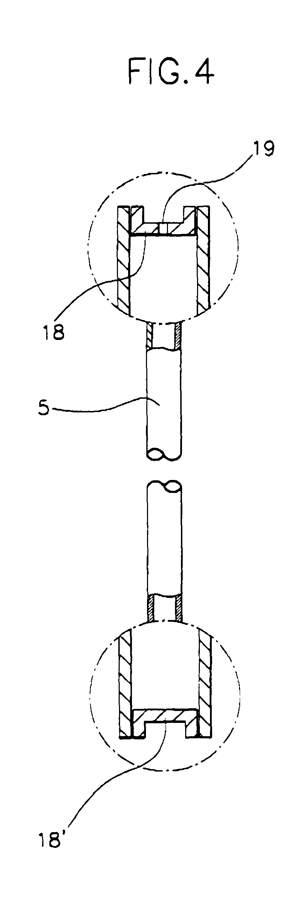

As shown in FIGS. 3 and 4, the electric welding apparatus for welding injection hole 19 of the present invention is designed to weld the injection hole formed one of caps 18 and 18' while pipe 5 stands erect. The apparatus comprises: a vacuum box 101 connected to vacuum pump 200 which causes cap 18 having injection hole 19 to be exposed in the vacuum condition; a pipe inserting portion 102 positioned in front of vacuum box 101 for causing pipe 5 to be inserted thereinto; a welding rod inserting portion 103 in which one end of welding rod 1C6 is exposed in the vacuum condition and spaced apart from the end of pipe 5; and a welding bar inserting portion 104 coupled to the back of welding rod inserting portion 103 and having a welding bar 107 for fixing welding rod 106.

On both sides of vacuum box 101 pipe inserting portion 102 and welding rod inserting portion 103 are screwed, and welding bar inserting portion 104 and inner nut 105 to welding rod inserting portion 103. All of them are nonconductors. The diameter of welding rod 106 of tungsten is almost the same as that of injection hole 19, the rod being inserted and supported by welding bar 107. The welding bar 107 is a conductor and spiral to be screwed to an outer nut 121. Different from the cap welder, vacuum box 101 has an inwardly protruded insertion pipe 109 into which the end of pipe 5 is inserted and arrested. At the center of insertion pipe 109 another injection hole 120 is formed so that when pipe 5 is put, injection hole 19 is exposed below welding rod 106 at a predetermined distance. To vacuum box 101 vacuum pump 200 and one port + of electric welder 201 are connected. The other port - of welder 201 is connected to the end of welding bar 107.

After welding both caps 18 and 18' of pipe 5 and injecting an adequate amount of heat medium through injection hole 19, this hole is electrically welded by a welder through the following conventional process.

The conventional electric welder is constructed in such a manner that a pipe inserting portion is provided below a vertically formed vacuum box, and a welding rod is inserted above the box. A vacuum pump and welder are connected to the box. Different from the conventional one, the electric welding apparatus of the present invention is made with a welding rod of tungsten. For this reason, the length of the welding rod does not become shorter, deprived of a welding bar lifting lever. The welding bar 107 to which welding rod 106 is coupled is screwed to outer nut 121 secured to vacuum box 101, as in the cap welding apparatus.

The pipe 5 whose caps 18 and 18' are welded and into which a heat medium is injected is put in such a manner that injection hole 19 is directed upward. Then, the pipe is inserted into the pipe inserting portion formed below vacuum box 101 so that injection hole 19 and the welding rod are positioned at a predetermined interval. Using vacuum pump 200, the air of vacuum box 101 and pipe 5 is fully discharged and vacuumized, and then electric welding is performed with electric welder 201 so that not welding rod 106 but the periphery of injection hole 19 is fused to be tightly closed. Reference numerals 20, 20' indicate inner nuts, 121 being outer nut, 21, 21' and 122 being rubber closing rings, 23, 23' and 124 being air incoming valves.

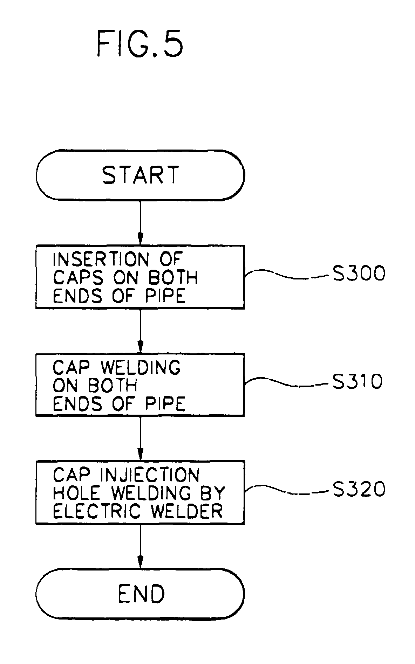

A manufacturing method of the above constructed heat pipe 5 is explained below. Referring to FIG. 5, in step S300, a stainless cap with no injection hole and a stainless cap with an injection hole are inserted into both ends of a stainless pipe cut in a predetermined length. When the caps are placed at the ends of the pipe, step S310 advances.

In step S310 the caps inserted into the ends of the pipe are welded simultaneously in the vacuum condition. Specifically, a butterfly screw is unfastened to open a hinged clamp, the pipe is placed on the clamp, the end of the pipe is pushed into the right vacuum box through the pipe inserting portion until it touches the end of the welding rod which is inserted in advance and whose position is adjusted. When the end of the pipe comes into contact with the end of the welding rod and does not go further, it is stopped and the hydraulic cylinder is manipulated to move the left vacuum box to the right so that the other end of the pipe is inserted into the vacuum box through the pipe inserting portion. It is also shifted until touching the end of the welding rod which is inserted in advance and whose position is adjusted. The operation of the hydraulic cylinder is controlled in an ordinary sensor detecting method.

When both ends of the pipe touch the ends of the welding rods in the respective left and right vacuum boxes, the hydraulic cylinder stops but another hydraulic cylinder for moving the clamp is operated so that it is placed approximately at the center of the pipe. Then, the clamp opened is closed and the butterfly screw is fastened.

In this state both welding tables retrocede slightly so as to make as long a distance between the welding rods and both ends of the pipe as to cause electric spark therebetween, and then the vacuum pump is operated to vacuumize the inside of the vacuum boxes. When they are vacuumized, the electric welder is operated to perform an electric welding. Through the electric welding, welding is carried out more perfectly because not the welding rods, which are made of tungsten not easily melting at a relatively high temperature, but the stainless caps and both ends of the pipe, objects to be welded, are fused.

The vacuum condition of the pipe with the caps welded is released by opening the air incoming valve of the vacuum boxes. Then, it is detached from the boxes in the reverse sequence of the insertion, and the next step S320 progresses.

In step S320 a heat medium is injected into the pipe through the injection hole formed on one of the caps, and the pipe is inserted into the injection hole welder while erect, for electric welding in the vacuum welding. When the top end of the pipe touches the insertion pipe, the injection hole is exposed and placed directly below the lower end of the welding rod which is put in advance and adjusted. Here, the vacuum pump is operated to vacuumize the vacuum boxes, and the electric welder is manipulated to close the injection hole in an ordinary method.

In the heat pipe manufacturing method, the injection hole is tightly closed in the sequence that material is injected into the heat pipe through the hole, the erect pipe is inserted into the pipe inserting portion, when the injection hole becomes near the welding rod, the vacuum, pump is operated to vacuumize the inside of the vacuum box, and at the same the electric welder is operated. Here, the welding rod of tungsten does not melt but the injection hole is fused. At the accomplishment of welding, the air incoming valve is opened to release the vacuum condition, and the pipe is extracted. This is the finish process in manufacture of heat pipe.

As described above, the welding of the present invention is performed rapidly for productivity, and more perfectly for higher density. This results in better performance and longer duration. In addition, the welding rods do not need adjustment in length, as well as replacement.

It will be apparent to the reader that the foregoing description of the invention has been presented for purposes of illustration and description and for providing an understanding of the invention and that many changes and modifications can be made without departing from the scope of the invention. It is therefore intended that the scope of the invention be indicated by the appended claims rather than by the foregoing description; and all changes which come within the meaning and range of equivalency of the claims are therefore intended to be embraced therein.

## Claims

1. A method of manufacturing a heat pipe comprising the steps of:
(a) coupling a cap with an injection hole and another cap with no hole to both ends of the pipe;
(b) welding the caps on both ends of the pipe in a vacuum condition; and
(c) injecting contents into the pipe, and tightly closing the injection hole through an electric welder.

2. The method as claimed in claim 1, wherein the step (c) comprises the substeps of:
injecting contents into the pipe through the injection hole;
inserting the pipe into a pipe inserting portion while standing erect so that the injection hole becomes near a welding rod; and
operating a vacuum pump to vacuumize a vacuum box, and at the same time, operating the electric welder to tightly close the injection hole.

3. An apparatus of manufacturing a heat pipe comprising:
pipe carrying means for holding and moving the pipe to a predetermined position on a worktable;
first and second welders provided on the worktable and on both ends of the pipe for welding a cap with no injection hole and another cap with an injection hole to the ends of the pipe, respectively;
first welder carrying means for moving the first welder to a predetermined position; and
electric welding means for injecting contents into the pipe through the injection hole of the cap, and tightly closing the hole.

4. The apparatus as claimed in claim 3, wherein the pipe carrying means comprises:
a clamp for fixing the middle of the pipe;
a supporting bar for holding the clamp;
a slider integrally formed in the middle of the supporting bar for sliding the top surface of the worktable; and
a hydraulic cylinder connected to the lower end of the supporting bar for shifting the slider.

5. The apparatus as claimed in claim 3, wherein the first and second welders each comprise:
a vacuum box connected to a vacuum pump so that both ends of the pipe are exposed in a vacuum condition;
a pipe inserting portion placed in front of the vacuum box for causing the pipe to be inserted;
a welding rod inserting portion movably installed at the back of the vacuum box, and in which the end of the welding rod is exposed in the vacuum condition and spaced apart from the end of the pipe at a predetermined distance; and
a welding bar inserting portion coupled at the back of the welding rod inserting portion, and having a welding bar for fixing the welding rod.

6. The apparatus as claimed in claim 3, wherein the first welder carrying means comprises:
a supporting bar for supporting the first welder;
a slider integrally formed in the middle of the supporting bar, and for sliding the top surface of the worktable; and
a hydraulic cylinder connected to the supporting bar for moving the slider.

7. The apparatus as claimed in claim 3, wherein the electric welding means comprises:
a vacuum box connected to a vacuum pump and in which the cap with the injection hole is exposed in a vacuum condition;
a pipe inserting portion placed in front of the vacuum box and for causing the pipe to be inserted;
a welding rod inserting portion movably inserted at the back of the vacuum box, and in which the end of the welding rod is exposed in a vacuum condition and spaced apart from the end of the pipe; and
a welding bar inserting portion coupled at the back of the welding rod inserting portion, and having a welding bar for fixing the welding rod.
